# EUROPÄISCHE PATENTANMELDUNG

(11) **EP 1 355 516 A1**
(43) Veröffentlichungstag der Anmeldung: **22.10.2003**
(21) Anmeldenummer: 03008017.0
(22) Anmeldetag: 10.04.2003
(51) Int. Cl.: H05B 39/00

(54) **Wechselrichter-Betrieb von Glühlampen in Fahrzeugen**

(30) Priorität: 16.04.2002 DE 10216970
(71) Anmelder: Patent-Treuhand-Gesellschaft für elektrische Glühlampen mbH, 81543 München (DE)
(72) Erfinder: Hirschmann, Günter, 81735 München (DE); Romberg, Ralf, Dr., 81476 München (DE); Wittig, Christian, 81547 München (DE)

(57) **Zusammenfassung**

Schaltungsanordnung zum Betrieb von Glühlampen in Fahrzeugen mit folgenden Merkmalen:
- Eingangsanschlüsse (J1, J2), die mit einer Bordversorgungsspannung (UB) gekoppelt sind, wobei die Bordversorgungsspannung (UB) im wesentlichen eine Gleichspannung ist,
- Ausgangsanschlüsse (J3, J4), die mit Glühlampen (Lp) gekoppelt sind,
dadurch gekennzeichnet, dass die Schaltungsanordnung einen Wechselrichter enthält, der an den Ausgangsanschlüssen (J3, J4) eine Ausgangsspannung (UA) bereitstellt, die im wesentlichen eine Wechselspannung ist.

## Beschreibung

### Technisches Gebiet

Die Erfindung geht aus von einer Schaltungsanordnung gemäß dem Oberbegriff des Anspruchs 1. Es handelt sich dabei insbesondere um die Bereitstellung einer Wechselspannung zum Betrieb von Glühlampen in Fahrzeugen, wobei das Fahrzeug eine Bordspannungsversorgung aufweist, die im wesentlichen eine Gleichspannung ist und der Wert dieser Gleichspannung über dem Wert einer Nennbetriebsspannung der Glühlampen liegt,

### Stand der Technik

Für die Bordspannungsversorgung in Fahrzeugen ist eine Gleichspannung mit einem Nennwert von 13,2V gebräuchlich. In Fahrzeugen eingesetzte Glühlampen weisen vorwiegend auch diesen oder einen ähnlichen Wert als Nennbetriebsspannung auf. Es gibt jedoch Fahrzeuge, die einen anderen Wert für die Bordspannungsversorgung aufweisen. Beispielsweise handelt es sich dabei um Nutzfahrzeuge mit einer Bordspannungsversorgung von 24V.

Die Automobilindustrie verfolgt seit einiger Zeit, das Ziel, die Bordspannungsversorgung auf 42V zu erhöhen. Für die Konstruktion von Halogenglühlampen hat sich gezeigt, dass die gebräuchliche Bordspannungsversorgung von 13,2V einen Wert darstellt, der als annähernd optimal angesehen werden kann. Neben logistischen Gründen ist dies ein Grund weshalb auch in Fahrzeugen mit einer Bordspannungsversorgung von 42V eine Nennbetriebsspannung von 13,2V für die im Fahrzeug verwendeten Glühlampen beibehalten werden soll. Dem entsprechend entsteht die Forderung nach einem Konverter, der eine Umsetzung der Bordspannungsversorgung von 42V auf die Nennbetriebsspannung der Glühlampen von 13,2V bewerkstelligt.

In der Schrift US 6,340,848 (Maeda) werden derartige Konverter angesprochen. Es handelt sich dabei durchwegs um DC/DC Konverter; d.h. die Ausgangsspannung dieser Konverter ist im wesentlichen eine Gleichspannung. Meist handelt es sich dabei um sog. Tiefsetzer, mit denen neben Glühlampen auch andere Verbraucher, wie z. B. elektronische Steuereinrichtungen oder Radios bedient werden können.

Zum Betrieb von Glühlampen ist ein gepulster Betrieb bekannt. Dabei wird mittels eines elektronischen Schalters eine Glühlampe mit einer Nennbetriebsspannung von 13,2V periodisch mit der Bordspannungsversorgung von 42V verbunden. Dadurch entsteht ein gepulster Betrieb der Glühlampe. Die Lampe wird mit Pulsen betrieben, die eine Pulsdauer und eine Amplitude von 42V aufweisen. Der Abstand der Pulse bestimmt eine Periodendauer der an der Lampe anliegenden Lampenspannung. Die Periodendauer soll so kurz sein, dass bedingt durch die thermische Trägheit der Lampenwendel, die Wendeltemperatur der Lampenspannung nicht folgen kann. Das Verhältnis von Pulsdauer zu Periodendauer bestimmt ein Tastverhältnis, mit dem ein Effektivwert der Lampenspannung eingestellt werden kann. Zur Verbreiterung des Spektrums der Lampenspannung kann die Periodendauer auch variieren.

Kennzeichnend für die beschrieben Konverter mit gepulster Arbeitsweise ist die U-nipolarität der Pulse. Die Lampenspannung kann in einen Wechselanteil und einen Gleichanteil zerlegt werden, wobei der Gleichanteil einen wesentlichen Anteil der Lampenspannung ausmacht. Es hat sich gezeigt, dass sich der Betrieb von Glühlampen mit unipolaren Pulsen nachteilig auf die Lebensdauer der Lampen auswirkt. Zudem können die Pulse elektromagnetische Störungen verursachen, falls keine Maßnahmen zur Begrenzung der Steilheit der Pulsflanken ergriffen werden.

### Darstellung der Erfindung

Es ist Aufgabe der vorliegenden Erfindung, eine Schaltungsanordnung gemäß dem Oberbegriff des Anspruchs 1 bereitzustellen, die einen Betrieb von Glühlampen ohne Beeinträchtigung der Lebensdauer bewerkstelligt.

Diese Aufgabe wird durch eine Schaltungsanordnung mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

In die erfindungsgemäße Schaltungsanordnung wird über Eingangsanschlüsse die Bordversorgungsspannung eingespeist, die im wesentlichen eine Gleichspannung darstellt. Erfindungsgemäß enthält die Schaltungsanordnung einen Wechselrichter, der die Gleichspannung der Bordversorgungsspannung in eine Wechselspannung umwandelt und für die Glühlampen an Ausgangsanschlüssen in Form einer Ausgangsspannung bereitstellt. Der Gleichanteil der Ausgangsspannung ist vernachlässigbar. Damit wird eine höhere Lebensdauer der Glühlampen gegenüber der unipolaren gepulsten Arbeitsweise gemäß dem Stand der Technik erreicht.

Ein Aspekt der Erfindung ist demnach der bipolar gepulste Betrieb der Glühlampen. Im folgenden werden beispielhaft 4 aus der einschlägigen Literatur bekannte Beispiele für die schaltungstechnische Ausführung des Wechselrichters aufgeführt, die in der erfindungsgemäßen Schaltungsanordnung eingesetzt werden können: Halbbrückenwechselrichter, Vollbrückenwechselrichter, Gegentaktwechselrichter und Vorwärts-Sperrwandler.

Der Halbbrücken-Wechselrichter benötigt zwei in Serie geschaltete, elektronische Schalter und mindestens einen Koppelkondensator. Die Glühlampen können direkt zwischen die Verbindungsstelle der elektronischen Schalter und den Koppelkondensator geschaltet werden. Der Effektivwert der Lampenspannung kann über das Tastverhältnis der elektronischen Schalter eingestellt werden. Es ist aber auch möglich die Glühlampen über einen Transformator mit dem Halbbrückenwechselrichter zu koppeln. Der Effektivwert der Lampenspannung wird dann auch durch das Übersetzungsverhältnis des Transformators bestimmt. Es ist dadurch ein Tastverhältnis von 0,5 realisierbar. Damit kommt ein weiterer Aspekt der Erfindung ins Spiel. Durch den Betrieb der Glühlampen mit Wechselspannung ist eine Anpassung des Bordversorgungsspannung an der Nennbetriebsspannung Glühlampen mit einem Transformator möglich; bezüglich des Tastverhältnisses erlangt man dadurch einen Freiheitsgrad, der zur Minimierung der elektromagnetischen Störungen, der von der erfindungsgemäßen Schaltungsanordnung ausgehen, benutzt werden. Zusammen mit Filtereinrichtungen lässt sich bevorzugt bei einem Tastverhältnis von 0,5 ein näherungsweise sinusförmiger Verlauf der Ausgangsspannung der Schaltungsanordnungen erzielen, was zu besonders geringen elektromagnetischen Störungen führt. Parasitäre Kapazitäten und Induktivitäten, sowie Magnetisierungseigenschaften des Transformators und Koppelkondensatoren können zur Realisierung der Filtereinrichtung benutzt werden.

Der Vollbrücken-Wechselrichter benötigt keine Koppelkondensatoren, dafür sind vier elektronische Schalter nötig, die sich in zwei Serienschaltungen von jeweils zwei in Serie geschalteten elektronischen Schaltern aufteilen. Analog zur Halbbrückenschaltung kann eine Glühlampe entweder direkt zwischen die Verbindungspunkte der beiden Serienschaltungen geschaltet werden, oder über einen Transformator mit dem Vollbrückenwechselrichter gekoppelt werden. Die weiteren Ausführungen zum Halbbrückenwechselrichter gelten entsprechen auch für den Vollbrücken-Wechselrichter.

Der Gegentaktwechselrichter benötigt nur zwei elektronische Schalter, keinen Koppelkondensator, dagegen ist immer ein Transformator nötig.

Auch für den Vorwärts-Sperrwandler ist immer ein Transformator nötig, dagegen benötigt er nur einen elektronischen Schalter. Der Wandler kann resonant oder nicht resonant ausgeführt sein.

Die Auswahl der Schaltungstopologie des Wechselrichters wird in der Praxis wesentlich durch die Kosten bestimmt. Aus technischer Sicht sind die Vor- und Nachteile der drei aufgeführten Beispiele aus der einschlägigen Literatur hinlänglich bekannt.

### Kurze Beschreibung der Zeichnungen

Im folgenden soll die Erfindung anhand von Ausführungsbeispielen unter Bezugnahme auf-Zeichnungen näher erläutert werden. Es zeigen:
- Figur 1: ein Ausführungsbeispiel der Erfindung in Form eines Halbbrücken-Wechselrichters,
- Figur 2: ein Ausführungsbeispiel der Erfindung in Form eines Vollbrücken-Wechselrichters,
- Figur 3: ein Ausführungsbeispiel der Erfindung in Form eines Gegentakt-Wechselrichters.
- Figur 4: ein Ausführungsbeispiel der Erfindung in Form eines Vorwärts-Sperrwandlers.

Im folgenden werden Transistoren durch den Buchstaben T, Anschlüsse durch den Buchstaben J, Induktivitäten durch den Buchstaben L und Kondensatoren durch den Buchstaben C, jeweils gefolgt von einer Zahl bezeichnet. Auch werden im Folgenden für gleiche und gleichwirkende Elemente der verschiedenen Ausführungsbeispiele durchweg gleiche Bezugszeichen verwendet.

### Bevorzugte Ausführung der Erfindung

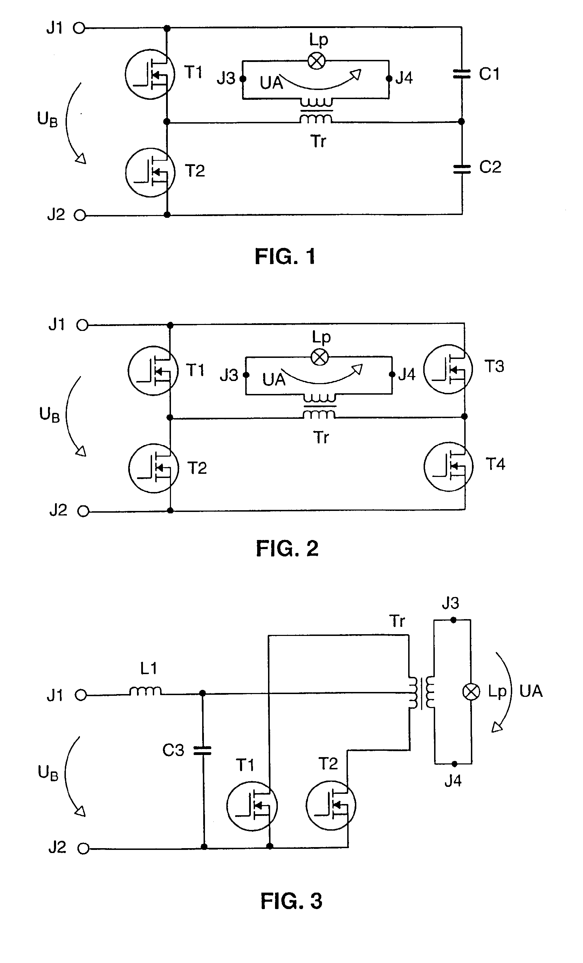

In Figur 1 ist eine erfindungsgemäße Schaltungsanordnung dargestellt, bei der der Wechselrichter durch einen Halbbrücken-Wechselrichter realisiert ist. An Eingangsanschlüssen J1 und J2 wird die Bordversorgungsspannung UB eingespeist. Zwischen J1 und J2 ist die Serienschaltung von zwei elektronischen Schaltern T1 und T2 geschaltet, die im Beispiel als MOSFET ausgeführt sind. Zwischen J1 und J2 ist auch die Serienschaltung von zwei Koppelkondensatoren C1 und C2 geschaltet. Zwischen dem Verbindungspunkt von T1 und T2 und dem Verbindungspunkt von C1 und C2 ist die Primärwicklung eines Transformators Tr geschaltet. An der Sekundärwicklung des Transformators ist über Ausgangsanschlüsse J3 und J4 die Glühlampe Lp angeschlossen. Die Gateanschlüsse von T1 und T2 werden an nicht dargestellte Pulsgeneratoren angeschlossen, die ein Einschalten des jeweiligen Transistors für die gewünschte Pulsdauer bewerkstelligen.

In Figur 2 ist eine erfindungsgemäße Schaltungsanordnung dargestellt, bei der der Wechselrichter durch einen Vollbrücken-Wechselrichter realisiert ist. Die Topologie entspricht der Topologie aus Figur 1, mit dem Unterschied, dass die Koppelkondensatoren C1 uns C2 aus Figur 1 durch zwei weitere elektronische Schalter T3 und T4 ersetzt sind. Die Gates von T3 und T4 werden auch an nicht dargestellte Pulsgeneratoren angeschlossen, die ein Einschalten des jeweiligen Transistors für die gewünschte Pulsdauer bewerkstelligen. Üblicherweise wird T1 gleichzeitig mit T4 und T2 gleichzeitig mit T3 eingeschaltet. Es ist aus der Literatur aber auch der sog Phase-Shift Modus bekannt, der eine Variation der Pulsdauer des Pulses, der in den Transformator Tr eingespeist wird, erlaubt. Auch bekannt ist ein Modus bei dem ein Brückenast, beispielsweise T1 und T2, mit einer wesentlich höheren Frequenz getaktet wird als der andere Brückenast.

In Figur 3 ist eine erfindungsgemäße Schaltungsanordnung dargestellt, bei der der Wechselrichter durch einen Gegentakt-Wechselrichter realisiert ist. Abweichend zu den Beispielen aus Figur 1 und 2 ist dem Gegentakt-Wechselrichter eine Filtereinrichtung bestehend aus der Induktivität L1 und der Kapazität C3 vorgeschaltet. In die Serienschaltung aus L1 und C3 wird über die Eingangsanschlüsse J1 und J2 die Bordversorgungsspannung UB eingespeist. Der Verbindungspunkt von L1 und C3 ist mit einer Mittelanzapfung der Primärwicklung des Transformators Tr gekoppelt. Die Mittelanzapfung ist über L1 mit J1 gekoppelt. Die Enden der Primärwicklung sind über jeweils einen elektronischen Schalter T1, T2 mit J2 verbunden. An der Sekundärwicklung des Transformators Tr ist über Ausgangsanschlüsse J3 und J4 die Glühlampe Lp angeschlossen. Die Gateanschlüsse von T1 und T2 werden an nicht dargestellte Pulsgeneratoren angeschlossen, die ein Einschalten des jeweiligen Transistors für die gewünschte Pulsdauer bewerkstelligen.

Die Resonanzfrequenz der Filtereinrichtung bestehend aus L1 und C3 kann auf die Frequenz abgeglichen werden, mit der T1 und T2 geschaltet werden. Die Ausgangsspannung ist dann sinusförmig. Eine näherungsweise sinusförmige Ausgangsspannung UA kann auch erreicht werden wenn lediglich L1 vorhanden ist. Im ausgeführten Beispiel nach Figur 3 ist die Filtereinrichtung dem Wechselrichter vorgeschaltet. Es ist auch denkbar, dass eine Filtereinrichtung dem Wechselrichter nachgeschaltet wird, beispielsweise durch eine Kapazität parallel zur Primär- oder Sekundärwicklung.

Mit ähnlichen Filtereinrichtungen können auch die Beispiele aus den Figuren 1 und 2 ausgestattet werden.

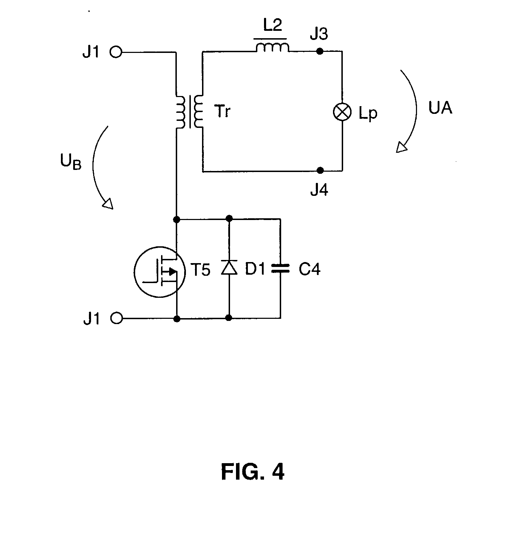

In Figur 4 ist eine erfindungsgemäße Schaltungsanordnung dargestellt, bei der der Wechselrichter durch einen Vorwärts-Sperrwandler realisiert ist.

Zwischen die Anschlüsse J1 und J2, an denen die Bordspannung UB anliegt, ist die Serienschaltung einer Primärwicklung eines Transformators Tr und ein elektronischer Schalter T5 geschaltet. Der elektronische Schalter T5 ist als MOSFET ausgeführt. Alternativ kann beispielsweise auch ein Bipolartransistor oder ein IGBT eingesetzt werden. Der Gateanschluß von T5 wird an einen nicht dargestellten Pulsgenerator angeschlossen, der ein Einschalten von T5 für die gewünschte Pulsdauer bewerkstelligt.

Parallel zum elektronischer Schalter T5 ist eine Diode D1 und ein Kondensator C4 geschaltet. Die Diode D1 dient als Freilaufdiode. Sie kann entfallen, falls die in T5 enthaltene Bodydiode die gewünschten Eigenschaften wie z. B. eine schnelle Rückwärtserholzeit erfüllt.

An eine Sekundärwicklung des Transformators Tr ist die Serienschaltung einer Induktivität L2 und über Anschlüsse J3, J4 eine Lampe Lp angeschlossen. An der Lampe liegt die Ausgangsspannung UA an.

Die Induktivität L2 ist auf den Kondensator C4 derart abgestimmt, dass ein resonanter Betrieb des Vorwärts-Sperrwandler erreicht wird. Der Transformator Tr kann so aufgebaut sein, dass er die Aufgaben der Induktivität L2 mit erfüllt.

Soll der Vorwärts-Sperrwandler keinen resonanten Betrieb aufweisen, kann die Induktivität L2 und der Kondensator C4 entfallen.

## Patentansprüche

1. Schaltungsanordnung zum Betrieb von Glühlampen in Fahrzeugen mit folgenden Merkmalen:
• Eingangsanschlüsse (J1, J2), die mit einer Bordversorgungsspannung (UB) gekoppelt sind, wobei die Bordversorgungsspannung (UB) im wesentlichen eine Gleichspannung ist,
• Ausgangsanschlüsse (J3, J4), die mit Glühlampen (Lp) gekoppelt sind,
**dadurch gekennzeichnet, dass** die Schaltungsanordnung einen Wechselrichter enthält, der an den Ausgangsanschlüssen (J3, J4) eine Ausgangsspannung (UA) bereitstellt, die im wesentlichen eine Wechselspannung ist.

2. Schaltungsanordnung gemäß Anspruch 1, **dadurch gekennzeichnet, dass** der Wechselrichter als Halbbrücken-Wechselrichter ausgeführt ist, der mit der Bordversorgungsspannung (UB) gekoppelt ist.

3. Schaltungsanordnung gemäß Anspruch 1, **dadurch gekennzeichnet, dass** der Wechselrichter als Vollbrücken-Wechselrichter ausgeführt ist, der mit der Bordversorgungsspannung (UB) gekoppelt ist.

4. Schaltungsanordnung gemäß Anspruch 1, **dadurch gekennzeichnet, dass** der Wechselrichter als Gegentakt-Wechselrichter ausgeführt ist, der mit der Bordversorgungsspannung (UB) gekoppelt ist.

5. Schaltungsanordnung gemäß Anspruch 1, **dadurch gekennzeichnet, dass** der Wechselrichter als Vorwärts-Sperrwandler ausgeführt ist, der mit der Bordversorgungsspannung (UB) gekoppelt ist.

6. Schaltungsanordnung gemäß Anspruch 1, **dadurch gekennzeichnet, dass** der Wechselrichter einen Transformator (Tr) enthält, der mit den Ausgangsanschlüssen (J3, J4) gekoppelt ist.

7. Schaltungsanordnung gemäß Anspruch 1, **dadurch gekennzeichnet, dass** die Bordversorgungsspannung (UB) einen Wert aufweist, der zwischen 28V und 50V liegt und die Ausgangsspannung (UA) einen Effektivwert aufweist, der zwischen 8,8V und 15,7V liegt.

8. Schaltungsanordnung gemäß Anspruch 1, **gekennzeichnet durch** eine gepulste Arbeitsweise des Wechselrichters.
